# DEMANDE DE BREVET EUROPEEN

(11) **EP 2 674 601 A1**
(43) Date de publication de la demande: **18.12.2013**
(21) Numéro de dépôt: 13305633.3
(22) Date de dépôt: 17.05.2013
(51) Int. Cl.: F02D 41/00, F02B 25/04, F02D 13/02, F02B 37/00, F01L 1/26

(54) **Procédé de balayage des gaz brûlés résiduels par double levée de soupapes pour un moteur à deux temps, notamment de type Diesel.**

(30) Priorité: 12.06.2012 FR 1201680
(71) Demandeur: IFP Energies nouvelles, 92852 Rueil-Malmaison Cedex (FR)
(72) Inventeur: Ternel, Cyprien, 78210 Saint Cyr L'Ecole (FR); Gautrot, Xavier, 92500 Rueil-Malmaison (FR)

(57) **Abrégé**

La présente invention concerne un procédé de balayage des gaz brûlés résiduels contenus dans la chambre de combustion (14) d'un moteur à combustion interne de type deux temps, au moins une tubulure d'échappement (24) contrôlée par une soupape d'échappement (26), des canaux d'admission d'air (32) dans lesquels circule de l'air suralimenté d'admission et débouchant dans ladite chambre par des lumières (34).

Selon l'invention, le procédé consiste :
- pendant la phase de détente/échappement/admission du moteur, à réaliser au moins une séquence d'ouverture/fermeture de la soupape d'échappement (26) avant l'introduction de l'air suralimenté dans la chambre de combustion,
- à réaliser au moins une séquence d'ouverture/fermeture de la soupape d'échappement (26, 26') après le début de l'introduction de l'air et avant la fin de l'introduction de cet air de façon à réaliser le balayage des gaz brûlés résiduels contenus dans la chambre de combustion.

## Description

La présente invention se rapporte à un procédé de balayage de gaz brûlés résiduels contenus dans la chambre de combustion d'un moteur à combustion interne fonctionnant selon un cycle à deux temps.

Elle concerne plus particulièrement mais non exclusivement un moteur deux temps de type Diesel.

Comme cela est connu, un moteur deux temps comprend un cylindre comportant des canaux d'admission avec des lumières d'admission qui débouchent dans la chambre de combustion de ce moteur et des moyens d'échappement qui permettent d'évacuer les gaz brûlés résultant de la combustion d'un mélange carburé.

Cette chambre est généralement délimitée par la paroi du cylindre sur laquelle arrivent les lumières, le haut d'un piston qui coulisse dans ce cylindre en un mouvement rectiligne alternatif entre un point mort haut et un point mort bas, et la partie de la culasse qui ferme le haut du cylindre.

Cette culasse porte les moyens d'échappement qui comprennent au moins une tubulure d'échappement contrôlée par une soupape d'échappement.

Dans le cas d'un moteur avec injection directe de carburant, comme un moteur Diesel, cette culasse porte également un injecteur de carburant permettant d'introduire ce carburant dans la chambre de combustion.

Généralement, la puissance délivrée par ce moteur est dépendante de la quantité d'air introduite dans sa chambre de combustion, quantité d'air qui est elle-même proportionnelle à la densité de cet air.

La quantité d'air admise dans la chambre de combustion au travers des lumières est donc augmentée par compression de l'air, comme cela est réalisé par un turbocompresseur ou un compresseur entraîné, au préalable de son admission dans cette chambre de combustion.

De manière à pouvoir encore plus augmenter cette quantité d'air dans la chambre de combustion du cylindre, il est prévu d'évacuer les gaz brûlés résiduels contenus initialement dans la chambre de combustion pour les remplacer par de l'air comprimé (ou air suralimenté).

Cette étape est plus communément appelée balayage des gaz brûlés et se réalise généralement au début de la phase d'admission du moteur en réalisant une circulation en court-circuit entre l'admission et l'échappement.

Plus précisément, pendant la phase de détende/échappement/admission du moteur et lorsque le piston est au voisinage du point mort bas et qu'il recouvre les lumières, la soupape d'échappement est commandée en ouverture pour évacuer les gaz d'échappement contenus dans la chambre de combustion.

En continuant sa course vers le point mort bas, le piston découvre les lumières d'admission. De l'air suralimenté est donc introduit dans la chambre de combustion en repoussant les gaz d'échappement vers la soupape d'échappement qui est restée ouverte.

Au voisinage du point mort bas du piston, la soupape d'échappement est fermée et l'admission de l'air comprimé se poursuit jusqu'à ce que le piston obstrue les lumières d'admission. Le mouvement du piston se poursuit de manière à réaliser la phase de compression de cet air et obtenir un mélange carburé pour la combustion/détente.

Bien que donnant satisfaction, cette étape de balayage présente néanmoins des inconvénients non négligeables.

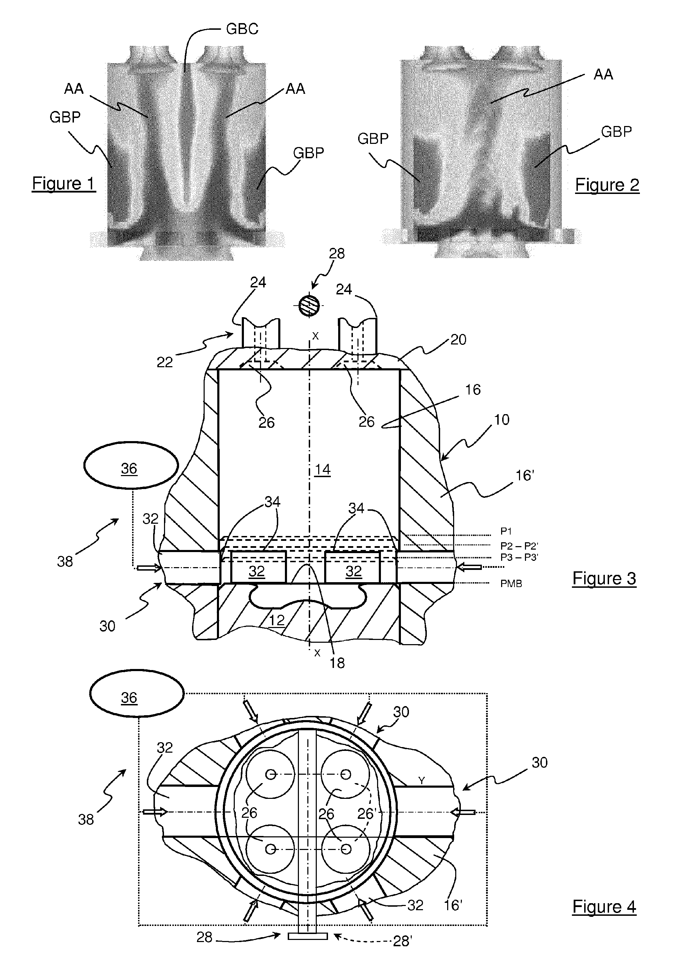

En effet, comme cela est mieux visible sur les figures 1 et 2 qui montrent des exemples de champ de vitesse de l'écoulement de l'air d'un moteur deux temps résultant de tests et de calculs réalisés par le demandeur, des gaz brûlés sont confinés au centre de la chambre (voir référence GBC de la figure 1) que l'air suralimenté ne réussit pas à balayer (voir référence AA de la figure 1) et/ou une poche de gaz brûlés est piégée sur la périphérie de la chambre de combustion vers le bas de cette chambre (voir référence GBP des figures 1 et 2) et qui n'est également pas balayée par l'air d'admission AA.

Par cela, les gaz brûlés résiduels ne sont pas totalement évacués en dehors de la chambre de combustion et en conséquence cette chambre n'est pas complément remplie d'air d'admission.

Ceci ne peut que perturber le déroulement souhaité de la combustion et diminuer les performances de ce moteur.

De plus, en fonction des conditions de fonctionnement du moteur, de l'air suralimenté est envoyé directement à l'échappement sans balayer les gaz brûlés, comme cela est mieux visible sur la figure 1.

Ceci a pour inconvénient majeur d'introduire de l'air frais dans la ligne d'échappement en induisant des effets néfastes tels que :
- altération des paramètres de gestion du moteur estimés et contrôlés par l'intermédiaire de capteurs placés à l'échappement, comme la sonde de richesse par exemple, conduisant à des perturbations dans le déroulement de la combustion ;
- dissipation de l'énergie qui a été nécessaire pour comprimer la quantité d'air frais directement mis à l'échappement pénalisant ainsi le rendement moteur.

La présente invention se propose de remédier aux inconvénients ci-dessus grâce à un procédé qui permet de balayer les gaz brûlés résiduels présents dans la chambre de combustion de ce moteur tout en optimisant le débit de l'air.

A cet effet, la présente invention concerne un procédé de balayage des gaz brûlés résiduels contenus dans la chambre de combustion d'un moteur à combustion interne de type deux temps, ledit moteur comportant au moins un cylindre comprenant la chambre de combustion, des moyens d'échappement avec au moins une tubulure d'échappement contrôlée par une soupape d'échappement, des canaux d'admission d'air dans lesquels circule de l'air suralimenté d'admission et débouchant dans ladite chambre par des lumières, **caractérisé en ce qu'il** consiste :
- pendant la phase de détente/admission du moteur, à réaliser au moins une séquence d'ouverture/fermeture de la soupape d'échappement avant l'introduction de l'air suralimenté dans la chambre de combustion,
- à réaliser au moins une séquence d'ouverture/fermeture de la soupape d'échappement après le début de l'introduction de l'air et avant la fin de l'introduction de cet air de façon à réaliser le balayage des gaz brûlés résiduels contenus dans la chambre de combustion.

Le procédé peut consister à réaliser au moins une séquence d'ouverture/fermeture d'un groupe de soupape d'échappement pendant la phase de détente/admission du moteur et à réaliser au moins une séquence d'ouverture/fermeture d'un autre groupe de soupape d'échappement après le début de l'introduction de l'air et avant la fin de l'introduction de cet air.

Le procédé peut consister à faire varier le moment où la soupape d'échappement débute sa séquence d'ouverture par rapport au début de l'introduction de l'air.

L'invention concerne également un moteur à combustion interne de type deux temps comportant au moins un cylindre avec une chambre de combustion, des moyens d'échappement avec au moins une tubulure d'échappement contrôlée par une soupape d'échappement, des canaux d'admission d'air dans lesquels circule de l'air suralimenté d'admission et débouchant dans ladite chambre par des lumières, **caractérisé en ce que** le moteur comprend des moyens de commande de soupape pour réaliser au moins une séquence d'ouverture/fermeture de la soupape d'échappement avant l'introduction de l'air suralimenté dans la chambre de combustion et au moins une séquence d'ouverture/fermeture de la soupape d'échappement après le début de l'introduction de l'air et avant la fin de l'introduction de cet air de façon à réaliser le balayage des gaz brûlés résiduels contenus dans la chambre de combustion.

Les moyens de commande peuvent comprendre un arbre à cames pour faire varier les phasages des lois de levée des soupapes d'échappement.

Le moteur peut comprendre deux groupes d'au moins une soupape d'échappement et les moyens de commande peuvent comprendre un arbre à cames pour commander indépendamment l'un des groupes par rapport à l'autre des groupes.

Les autres caractéristiques et avantages de l'invention vont apparaître maintenant à la lecture de la description qui va suivre, donnée à titre uniquement illustratif et non limitatif, et à laquelle sont annexées :
- la figure 3 qui montre un moteur deux temps utilisé pour un balayage de gaz brûlés selon l'invention en coupe axiale partielle ;
- la figure 4 qui montre ce moteur en coupe locale radiale partielle ;
- la figure 5 qui montre des courbes illustrant les différentes lois de levée (L) des soupapes d'échappement et l'ouverture des lumières d'admission en fonction de la rotation du vilebrequin (en degrés V) du moteur utilisant le procédé selon l'invention et
- la figure 6 qui montre un autre exemple de lois de levée (L) des soupapes d'échappement et de l'ouverture des lumières d'admission en fonction de la rotation du vilebrequin (en degrés V) du moteur.

Sur les figures 3 et 4, le moteur à combustion interne à deux temps comporte au moins un cylindre 10 à l'intérieur duquel coulisse un piston 12 en un mouvement rectiligne alternatif.

Ce cylindre comporte une chambre de combustion 14 d'axe longitudinal vertical XX délimitée par la paroi interne 16 du cylindre, le haut 18 du piston 12 et la partie de la culasse 20 qui ferme le haut du cylindre.

La culasse porte des moyens d'échappement de gaz brûlés 22 provenant de la combustion d'un mélange carburé dans la chambre de combustion. Ces moyens comportent au moins une tubulure d'échappement 24 arrivant dans la chambre de combustion et contrôlée par une soupape d'échappement 26. Dans l'exemple décrit, il est prévu quatre tubulures régulièrement réparties circonférentiellement.

Les soupapes d'échappement 26 sont commandées en ouverture et en fermeture par tous moyens connus permettant de réaliser une double levée de ces soupapes.

Pour cela, il est utilisé des moyens de commande 28, de type arbre à cames relié par tous moyens connus, comme une courroie crantée, au vilebrequin (non représenté) de ce moteur.

A titre d'exemple non limitatif, cet arbre à cames comporte une came associée à une seconde came permettant d'assurer la loi de double levée de ces soupapes.

Bien entendu et cela sans sortir du cadre de l'invention, ces moyens de commande peuvent être des moyens de commande spécifiques pour chaque soupape, comme un actionneur électromagnétique, électropneumatique ou autre, qui agit directement sur la tige de la soupape d'échappement.

Il est à noter que le terme "levée" correspond à la représentation graphique (selon deux axes) du mouvement d'une soupape à partir du début de son ouverture de l'orifice de la tubulure jusqu'à la fin de sa fermeture de cet orifice en passant par sa position de pleine ouverture.

Dans le cas d'un moteur deux temps avec injection directe de carburant, tel qu'un moteur de type Diesel, un injecteur de carburant (non représenté) est porté par cette culasse pour introduire du carburant dans la chambre de combustion.

Bien entendu et cela sans sortir du cadre de l'invention, la culasse peut également porter un moyen d'allumage du mélange carburé, comme une bougie à étincelle (non représentée) pour l'utilisation d'un moteur deux temps à allumage commandé.

Le cylindre 10 comporte au moins un moyen d'admission d'air 30 pour amener de l'air suralimenté à l'intérieur de la chambre de combustion de manière à y réaliser un mélange carburé.

Dans l'exemple illustré sur les figures, six moyens d'admission sont prévus en étant répartis régulièrement circonférentiellement à 60°.

Ce moyen d'admission comprend un canal d'admission d'air 32, sensiblement horizontal, qui est prévu dans la paroi 16' du cylindre 10 et qui débouche par une lumière 34 dans la chambre de combustion du moteur et au dessus du haut 18 du piston 12 lorsque celui-ci est à sa position de point mort bas.

Ces canaux d'admission sont en section de forme quadrilatérale, ici rectangulaire avec les grands côtés du rectangle sensiblement horizontaux, mais toute autre forme est envisageable, comme une forme circulaire. Les lumières qui aboutissent dans la chambre de combustion ont généralement la même configuration en section que ces canaux.

Ces canaux sont alimentés en air par un moyen de compression 36, comme un compresseur entraîné de type à lobes ou un turbocompresseur, de façon à introduire de l'air comprimé (ou air suralimenté) dans ces canaux par un dispositif de distribution d'air 38.

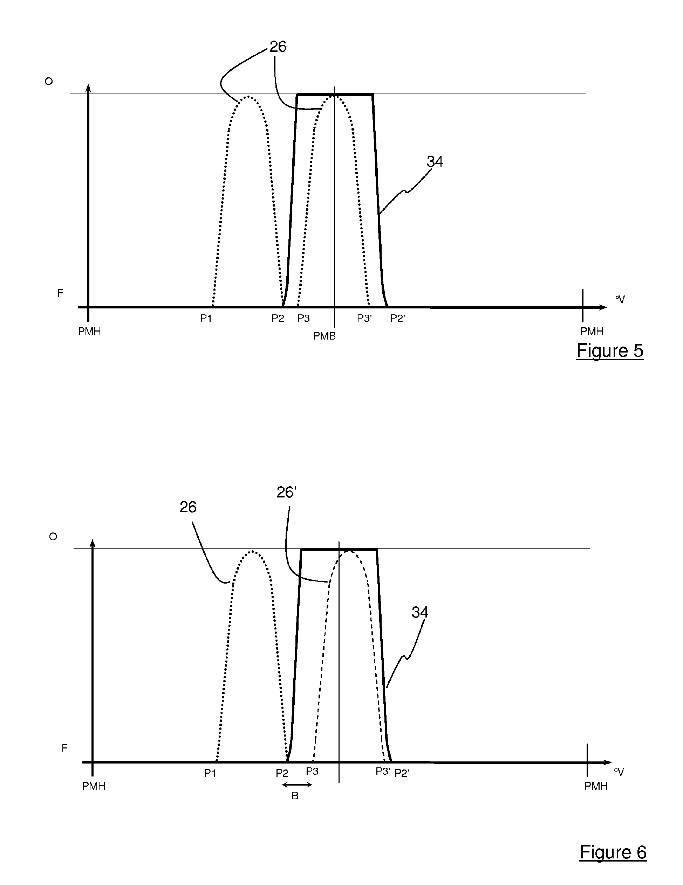

En fonctionnement et en se rapportant en plus à la figure 5, pendant la phase de détente/échappement/admission du moteur, le mélange carburé présent dans la chambre de combustion est brûlé et les gaz repoussent le piston 12 jusqu'à ce qu'il arrive à la position P1 indiquée sur la figure 3 tout en couvrant les lumières 34 des canaux 32 (Phase de détente).

A cette position, les soupapes d'échappement 26 s'ouvrent de manière à laisser s'échapper les gaz brûlés contenus dans la chambre 14 par les tubulures d'échappement 24. Le piston 12 continue ensuite sa course jusqu'à la position P2 où il aborde la partie supérieure des lumières toute en continuant à les masquer et où les soupapes d'échappement arrivent à la position de fermeture (Phase échappement).

Ainsi, durant la course du piston entre la position P1 et la position P2 associée à la séquence d'ouverture/fermeture des soupapes d'échappement, les gaz d'échappement sont en grande partie évacués et la pression dans la chambre de combustion a chuté de façon conséquente.

Bien entendu et cela sans sortir du cadre de l'invention, il peut être prévu de réaliser au moins deux séquences d'ouverture/fermeture des soupapes d'échappement entre les positions P1-P2 du piston de façon à pouvoir contrôler l'évacuation des gaz d'échappement présents dans la chambre de combustion.

A partir de cette position P2, le piston 12 poursuit sa course vers son point mort bas pour arriver à la position P3. Durant cette course entre la position P2 et la position P3, les lumières d'admission 36 sont progressivement découvertes en partie par le piston et de l'air suralimenté est introduit dans la chambre de combustion 14 (Phase admission avec début d'introduction d'air).

Pendant cette course, les soupapes d'échappement sont maintenues en position de fermeture, ce qui permet d'éviter que l'air suralimenté ne pénètre à une trop grande vitesse dans la chambre et de limiter la circulation en court circuit avec les moyens d'échappement.

A cette position P3, le piston poursuit sa course vers le point mort bas PMB et les soupapes d'échappement 26 sont commandées à nouveau en ouverture. L'air suralimenté introduit dans la chambre de combustion permet alors de repousser les gaz brûlés encore présents dans cette chambre vers les soupapes d'échappement 26 pour les évacuer par les tubulures 24. Ceci se réalise d'autant plus aisément que la pression régnant à l'intérieur de la chambre a chuté lors de la première séquence d'ouverture/fermeture des soupapes d'échappement. Arrivé à cette position de PMB, le piston a une course inverse allant de ce PMB vers la position P3', où les ouvertures 34 sont partiellement obstruées par le piston, et les soupapes 26 suivent une séquence pour arriver à une position de fermeture à cette position P3' du piston.

Ainsi l'étape de balayage des gaz brûlés se réalise entre les positions P3 et P3' du piston.

Comme précédemment mentionné, il peut être prévu de réaliser au moins deux séquences d'ouverture/fermeture des soupapes d'échappement entre les positions P3-P3' du piston de façon à pouvoir également contrôler l'évacuation des gaz d'échappement.

Bien entendu, l'homme du métier sera à même de déterminer la position P3' pour la fermeture des soupapes d'échappement de manière à éviter la circulation en court circuit de l'air d'admission vers l'échappement.

Dès que l'étape de balayage est terminée, c'est-à-dire à la fermeture des soupapes d'échappement, l'introduction dans la chambre de combustion de l'air suralimenté se poursuit de la position P3' jusqu'à la position P2' du piston où les lumières sont alors complètement masquées par ce piston.

A partir de cette position, la phase compression de l'air contenu dans la chambre peut se réaliser et le cycle de fonctionnement du moteur peut se poursuivre.

La figure 6 se réfère à des lois de levée (L) de soupapes d'échappement et de l'ouverture des lumières d'admission en fonction de la rotation du vilebrequin (en degrés V) du moteur pour un moteur comportant au moins deux groupes d'au moins une soupape d'échappement 26, 26', ici deux groupes de deux soupapes, qui sont associés à des moyens de commande 28', de type arbre à cames VVA (Variable Valve Actuation). Ce type d'arbre à cames permet de commander en ouverture et en fermeture les soupapes en pouvant faire varier leurs phasages des lois de levée et ce indépendamment les unes des autres ou de manière associée. Ce type d'arbre à cames permet également de commander indépendamment l'un des groupes par rapport à l'autre des groupes.

A titre d'exemple non limitatif, cet arbre à cames comporte une came associée à une seconde came permettant d'assurer les lois de double levée de ces soupapes d'échappement avec un dispositif de débrayage rendant inopérationnelle l'une ou l'autre des cames.

Ainsi, cet arbre à cames commande le groupe de soupapes d'échappement 26 pour une séquence d'ouverture/fermeture entre les positions P1-P2 du piston tout en maintenant en position de fermeture les soupapes 26'.

L'autre groupe de soupapes 26' est commandé en ouverture/fermeture par l'arbre à cames 28' pendant le déplacement du piston entre positions P3-P3' alors que les soupapes 26 sont maintenues en position de fermeture.

De plus, grâce à cet arbre à cames de type VVA, il est possible de modifier l'intervalle d'angle de rotation de vilebrequin B entre la position P2 du piston où l'admission d'air suralimenté débute et la position P3 où les soupapes d'échappement 26' s'ouvrent. Ceci permet ainsi de contrôler l'étendue du déroulement de l'étape de balayage des gaz brûlés résiduels.

## Revendications

1. Procédé de balayage des gaz brûlés résiduels contenus dans la chambre de combustion (14) d'un moteur à combustion interne de type deux temps, ledit moteur comportant au moins un cylindre (10) comprenant la chambre de combustion, des moyens d'échappement (22) avec au moins une tubulure d'échappement (24) contrôlée par une soupape d'échappement (26), des canaux d'admission d'air (32) dans lesquels circule de l'air suralimenté d'admission et débouchant dans ladite chambre par des lumières (34), **caractérisé en ce qu'il** consiste :
- pendant la phase de détente/admission du moteur, à réaliser au moins une séquence d'ouverture/fermeture de la soupape d'échappement (26) avant l'introduction de l'air suralimenté dans la chambre de combustion,
- à réaliser au moins une séquence d'ouverture/fermeture de la soupape d'échappement (26, 26') après le début de l'introduction de l'air et avant la fin de l'introduction de cet air de façon à réaliser le balayage des gaz brûlés résiduels contenus dans la chambre de combustion.

2. Procédé de balayage des gaz brûlés résiduels d'un moteur selon la revendication 1 dans lequel le moteur comprend deux groupes d'au moins une soupape d'échappement (26, 26'), **caractérisé en ce qu'il** consiste à réaliser au moins une séquence d'ouverture/fermeture d'un groupe de soupape d'échappement (26) pendant la phase de détente/admission du moteur et à réaliser au moins une séquence d'ouverture/fermeture d'un autre groupe de soupape d'échappement (26') après le début de l'introduction de l'air et avant la fin de l'introduction de cet air.

3. Procédé de balayage des gaz brûlés résiduels d'un moteur selon la revendication 2, **caractérisé en ce qu'il** consiste à faire varier le moment où la soupape d'échappement (26, 26') débute sa séquence d'ouverture par rapport au début de l'introduction de l'air.

4. Moteur à combustion interne de type deux temps comportant au moins un cylindre (10) avec une chambre de combustion (14), des moyens d'échappement (22) avec au moins une tubulure d'échappement (24) contrôlée par une soupape d'échappement (26, 26'), des canaux d'admission d'air (32) dans lesquels circule de l'air suralimenté d'admission et débouchant dans ladite chambre par des lumières (36), **caractérisé en ce que** le moteur comprend des moyens de commande de soupape pour réaliser au moins une séquence d'ouverture/fermeture de la soupape d'échappement (26) avant l'introduction de l'air suralimenté dans la chambre de combustion et au moins une séquence d'ouverture/fermeture de la soupape d'échappement (26, 26') après le début de l'introduction de l'air et avant la fin de l'introduction de cet air de façon à réaliser le balayage des gaz brûlés résiduels contenus dans la chambre de combustion.

5. Moteur selon la revendication 4, **caractérisé en ce que** les moyens de commande comprennent un arbre à cames (28, 28') pour faire varier les phasages des lois de levée des soupapes d'échappement.

6. Moteur selon la revendication 4 ou 5 dans lequel le moteur comprend deux groupes d'au moins une soupape d'échappement (26, 26'), **caractérisé en ce que** les moyens de commande comprennent un arbre à cames (28, 28') pour commander indépendamment l'un des groupes par rapport à l'autre des groupes.
